# EUROPEAN PATENT APPLICATION

(11) **EP 4 572 001 A1**
(43) Date of publication of application: **18.06.2025**
(21) Application number: 23817283.7
(22) Date of filing: 31.01.2023
(51) Int. Cl.: H01M 50/627, H01M 50/40, H01M 50/15, H01M 50/553, H01M 50/593

(54) **SECONDARY BATTERY**

(30) Priority: 08.08.2022 KR 20220098476
(71) Applicant: SAMSUNG SDI CO., LTD., Giheung-gu Yongin-si, Gyeonggi-do 17084 (KR)
(72) Inventor: LEE, Hyun Soo, Yongin-si Gyeonggi-do 17084 (KR)
(74) Representative: Gulde & Partner
(86) International application number: PCT/KR2023/001382
(87) International publication number: WO 2024/034757

(57) **Abstract**

An embodiment of the present invention relates to a secondary battery, and a technical object of the present invention for solving the above problem is to provide a secondary battery capable of improving liquid injectability.

For this, the present invention discloses a secondary battery including: an electrode assembly comprising a first electrode plate, a second electrode plate, and a separator interposed between the first electrode plate and the second electrode plate; a can having ends that are opened to left and right sides and provided with a space therein to accommodate the electrode assembly; a first cap plate configured to seal the left end of the can; a second cap plate configured to seal the right end of the can; a first terminal installed on the first cap plate so as to be electrically connected to the first electrode plate; a second terminal installed on the second cap plate so as to be electrically connected to the second electrode plate; a first liquid injection hole defined in the first cap plate; and a second liquid injection hole defined in the second cap plate.

## Description

### TECHNICAL FIELD

An embodiment of the present invention relates to a secondary battery.

### BACKGROUND ART

Unlike primary batteries that are not chargeable, secondary batteries are batteries that are chargeable and dischargeable. In the case of low-capacity batteries, the batteries are used in small portable electronic devices such as mobile phones and camcorders, and in the case of high-capacity batteries, the batteries are widely used as power sources for driving motors in hybrid and electric vehicles. The secondary batteries may be classified into cylindrical, prismatic, and pouch-type (or polymer-type) secondary batteries, etc., according to their external appearance. Among them, the prismatic battery may have a structure in which an electrode assembly with a separator interposed between a positive electrode plate and a negative electrode plate, an electrolyte, and the like are embedded in a can, and a cap plate is coupled to an open top surface of the can.

The above-described information disclosed in the technology may be only intended to enhance understanding of the background of the present invention and thus include information that does not constitute the related art.

### DISCLOSURE OF THE INVENTION

### TECHNICAL PROBLEM

An embodiment of the present invention provides a secondary battery capable of improving liquid injectability.

### TECHNICAL SOLUTION

A secondary battery according to an embodiment of the present invention includes: an electrode assembly comprising a first electrode plate, a second electrode plate, and a separator interposed between the first electrode plate and the second electrode plate; a can having ends that are opened to left and right sides and provided with a space therein to accommodate the electrode assembly; a first cap plate configured to seal the left end of the can; a second cap plate configured to seal the right end of the can; a first terminal installed on the first cap plate so as to be electrically connected to the first electrode plate; a second terminal installed on the second cap plate so as to be electrically connected to the second electrode plate; a first liquid injection hole defined in the first cap plate; and a second liquid injection hole defined in the second cap plate.

In addition, the first liquid injection hole may be disposed above the first terminal in the first cap plate.

In addition, the second liquid injection hole may be disposed above the second terminal in the second cap plate.

In addition, the second liquid injection hole may be disposed at the same height as the first liquid injection hole.

In addition, the second liquid injection hole may be disposed above the first liquid injection hole.

In addition, the first liquid injection hole and the second liquid injection hole may be disposed at heights different from each other.

In addition, the second liquid injection hole may have the same size as the first liquid injection hole.

In addition, the second liquid injection hole may have a size less than that of the first liquid injection hole.

In addition, the first liquid injection hole and the second liquid injection hole may have sizes different from each other.

In addition, the first liquid injection hole may be configured to inject an electrolyte into the can, and the second liquid injection hole is configured to suction air from the inside of the can.

In addition, an insulating member may be formed in at least one of between the electrode assembly and the first cap plate or between the electrode assembly and the second cap plate.

In addition, an insulating member may be formed in at least one of between the first cap plate and the first terminal or between the second cap plate and the second terminal.

### ADVANTAGEOUS EFFECTS

The embodiment of the present invention may provide the secondary battery in which the electrolyte is injected into the can through the first liquid injection hole to discharge the electrolyte or suction the air, thereby improving the liquid injectability.

### BRIEF DESCRIPTION OF THE DRAWINGS

FIG 1 is a perspective view of a secondary battery according to an embodiment of the present invention.
FIG 2 is a left view of the secondary battery according to an embodiment of the present invention.
FIG 3 is a right view of the secondary battery according to an embodiment of the present invention.
FIG 4 is a cross-sectional view of the secondary battery according to an embodiment of the present invention.
FIG 5 is a view illustrating one method for injecting an electrolyte into a secondary battery according to an embodiment of the present invention.
FIG 6 is a view illustrating another method for injecting an electrolyte into a secondary battery according to an embodiment of the present invention.

### MODE FOR CARRYING OUT THE INVENTION

Hereinafter, embodiments will be described in detail with reference to the accompanying drawings.

Embodiments of the present invention may, however, be embodied in many different forms and should not be construed as being limited to the embodiments set forth herein; rather, these embodiments are provided so that those skilled in the art thoroughly understand the present invention. Rather, these embodiments are provided so that this disclosure will be thorough and complete, and will fully convey the scope of the present invention to those skilled in the art.

In addition, in the following drawings, the thickness or size of each layer is exaggerated for convenience and clarity of description, and the same reference numerals in the drawings refer to the same elements. As used herein, the term "and/or" includes any and all combinations of one or more of the associated listed items. In this specification, it will also be understood that if a member A is referred to as being connected to a member B, the member A can be directly connected to the member B or indirectly connected to the member B with a member B therebetween.

The terms used in this specification are for illustrative purposes of the present invention only and should not be construed to limit the meaning or the scope of the present invention. As used in this specification, a singular form may, unless definitely indicating a particular case in terms of the context, include a plural form. Also, the expressions "comprise" and/or "comprising" used in this specification neither define the mentioned shapes, numbers, steps, operations, members, elements, and/or groups of these, nor exclude the presence or addition of one or more other different shapes, numbers, steps, operations, members, elements, and/or groups of these, or addition of these. The term "and/or" used herein includes any and all combinations of one or more of the associated listed items.

As used herein, terms such as "first," "second," etc. are used to describe various members, components, areas, layers, and/or portions. However, it is obvious that the members, components, areas, layers, and/or portions should not be defined by these terms. The terms do not mean a particular order, up and down, or superiority, and are used only for distinguishing one member, component, area, layer, or portion from another member, component, area, layer, or portion. Thus, a first member, component, area, layer, or portion which will be described may also refer to a second member, component, area, layer, or portion, without departing from the teaching of the present invention.

Spatially relative terms, such as "below", "beneath", "lower", "above", "upper" and the like, may be used herein for ease of description to describe one element or feature's relationship to another element(s) or feature(s) as illustrated in the figures. These spatially relative terms are intended for easy comprehension of the prevent invention according to various process states or usage states of the prevent invention, and thus, the present invention is not limited thereto. For example, an element or feature shown in the drawings is turned inside out, the element or feature described as "beneath" or "below" may change into "above" or "upper". Thus, the term "lower" may encompass the term "upper" or "below".

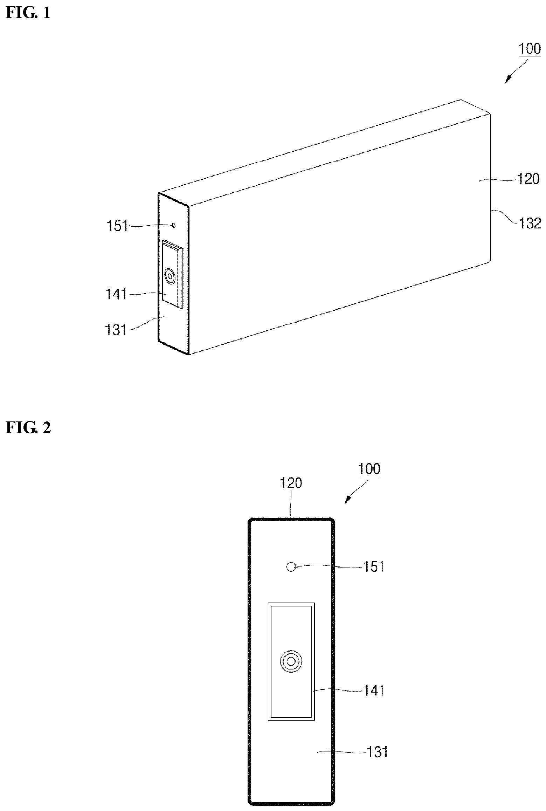

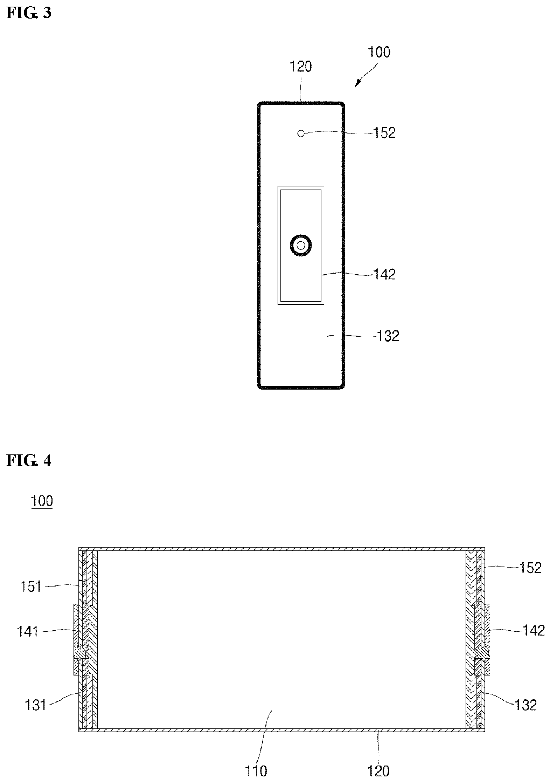

FIG 1 is a perspective view of a secondary battery 100 according to an embodiment of the present invention, FIG 2 is a left view of the secondary battery 100 according to an embodiment of the present invention, FIG 3 is a right view of the secondary battery 100 according to an embodiment of the present invention, and FIG 4 is a cross-sectional view of the secondary battery 100 according to an embodiment of the present invention.

Referring to FIGS. 1 to 4, the secondary battery 100 according to an embodiment of the present invention includes an electrode assembly 110, a can 120, a first cap plate 131, a second cap plate 132, a first terminal 141, a second terminal 142, a first liquid injection hole 151, and a second liquid injection hole 152.

The electrode assembly 110 includes a first electrode plate, a second electrode plate, and a separator.

The first electrode plate may be any one of a negative electrode plate and a positive electrode plate. For example, when the first electrode plate is a negative electrode plate, the first electrode plate may include a negative electrode coating portion coated with a negative electrode active material on a conductive metal thin plate, for example, a negative electrode collector made of copper or nickel foil or mesh and a negative electrode non-coating portion that is not coated with the negative electrode active material. For example, the negative electrode active material may include a carbon-based material, Si, Sn, tin oxide, a tin alloy composite, transition metal oxide, lithium metal nitrite, or metal oxide.

The second electrode plate may be the other one of the negative electrode plate and the positive electrode plate. For example, when the second electrode plate is a positive electrode plate, the second electrode plate may include a positive electrode coating portion coated with a positive electrode active material on a conductive metal thin plate, for example, a positive electrode collector made of aluminum foil or mesh and a positive electrode non-coating portion that is not coated with the positive electrode active material. The positive electrode active material may be made of a chalcogenide compound, for example, composite metal oxide such as LiCoO2, LiMn2O4, LiNiO2, LiNiMnO2, and the like.

The separator is disposed between the first electrode plate and the second electrode plate to prevent electrical short-circuit from occurring between the first electrode plate and the second electrode plate. For example, the separator may be made of polyethylene, polypropylene, a porous copolymer of polyethylene and polypropylene, or the like.

The can 120 serves to accommodate the electrode assembly and the electrolyte. The can 120 has opened left and right ends and a space therein, based on the drawing. In other words, the can 120 may be formed in the form of a pipe extending to left and right sides, preferably in a rectangular pipe shape. In addition, the can 120 may have a safety vent (not shown) on either side and preferably have a safety vent at a narrow side in the rectangular pipe shape. When a gas is generated inside the can 120, the safety vent is spontaneously incised by a resulting pressure to release the gas and pressure, thereby preventing the secondary battery 100 from being exploded.

The first cap plate 131 is formed in a rectangular plate shape to correspond to one opened end (left end in the drawing) of the can 120. Thus, the first cap plate 131 is welded to one end of the can 120 to seal the one end.

The second cap plate 132 is formed in a rectangular plate shape to correspond to the other opened end (right end in the drawing) of the can 120. Thus, the second cap plate 132 is welded to the other end of the can 120 to seal the other end.

The first terminal 141 is electrically connected to the first electrode plate of the electrode assembly and is formed on the first cap plate 131. Thus, the first terminal 141 serves as a terminal on the first cap plate 131.

The second terminal 142 is electrically connected to the second electrode plate of the electrode assembly and is formed on the second cap plate 132. Thus, the second terminal 142 serves as a terminal on the second cap plate 132.

In order to prevent electrical short-circuit between the first terminal 141 and the second terminal 142 from occurring, an insulating member (not shown) may be installed in at least one of between the can 120 and the first cap plate 131 or between the can 120 and the second cap plate 123 and/or at least one of between the first cap plate 131 and the first terminal 141 or between the second cap plate 132 and the second terminal 142. In addition, the insulating member may be installed in at least one of between the electrode assembly 110 and the first cap plate 131 or between the electrode assembly 110 and the second cap plate 132.

The first liquid injection hole 151 is used to inject the electrolyte into the can 120, and a method for injecting the electrolyte into the can 120 using the same will be described later. The first liquid injection hole 151 is formed in the first cap plate 131. More specifically, the first liquid injection hole 151 may be disposed above the first terminal 141 in the first cap plate 131, based on the drawing.

The second liquid injection hole 152 is also used to inject the electrolyte into the can 120, and a method for injecting the electrolyte into the can 120 using the same will be described later. The second liquid injection hole 152 is formed in the second cap plate 132. More specifically, the second liquid injection hole 152 may be disposed above the second terminal 142 in the second cap plate 132, based on the drawing.

Furthermore, the second liquid injection hole 152 may be disposed at least equal to or higher than the first liquid injection hole 151, based on the drawing. In addition, the second liquid injection hole 152 may be formed at least equal to or smaller than the first liquid injection hole 151.

Based on the structure described above, a method for injecting the electrolyte into the can 120 using the first liquid injection hole 151 and the second liquid injection hole 152 will be described below.

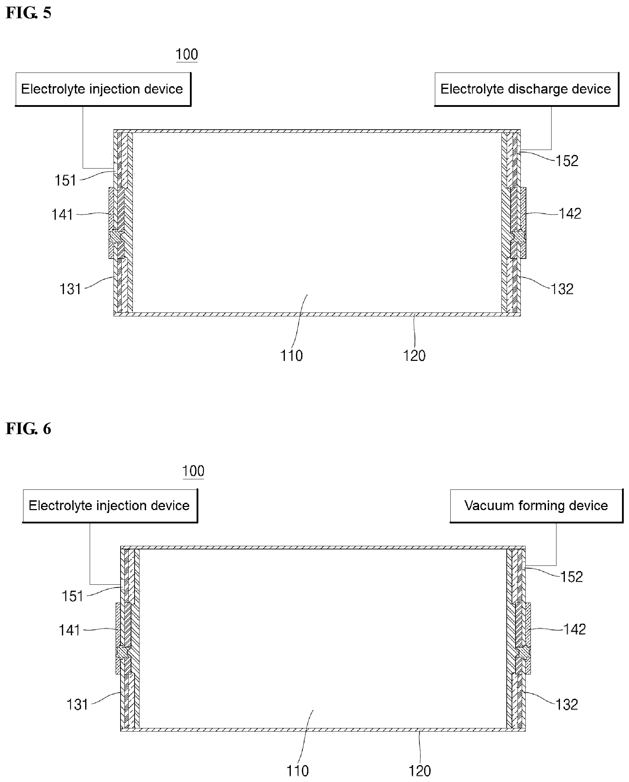

FIG 5 is a view illustrating one method for injecting an electrolyte into a secondary battery according to an embodiment of the present invention.

Referring to FIG 5, an electrolyte injection device is connected to a first liquid injection hole 151, and an electrolyte discharge device is connected to a second liquid injection hole 152. Thus, while an electrolyte is injected into a can 120 through the first liquid injection hole 151 using the electrolyte injection device, the electrolyte is discharged from the inside of the can 120 through the second liquid injection hole 152 using the electrolyte discharge device.

A flow rate of the electrolyte injected into the can 120 through the first liquid injection hole 151 is controlled to be greater than that of the electrolyte discharged from the inside of the can 120 through the second liquid injection hole 152. Here, since a difference in flow rate may be differently controlled according to a length, volume, injection amount, desired process time, etc. of the can 120, specific details thereof will be omitted.

The electrolyte discharged from the inside of the can 120 through the second liquid injection hole 152 may be circulated to the electrolyte injection device and then be injected into the can 120 again through the first liquid injection hole 151.

According to the above-described method, in the secondary battery having a terminal part at a side surface thereof, liquid injectability may be improved compared to a case in which the electrolyte is injected into the can through one liquid injection hole, and in particular, the liquid injectability may be more improved in a so-called long cell that is elongated to left and right sides when based on the drawing.

In addition, since the second liquid injection hole 152 is disposed above the first liquid injection hole 151, a problem, in which the electrolyte is discharged from the inside of the can 120 through the second liquid injection hole 152 before the electrolyte injected into the can 120 through the first liquid injection hole 151 reaches a target liquid injection amount, may be prevented from occurring.

In addition, since the second liquid injection hole 152 is smaller than the first liquid injection hole 151, the flow rate of the electrolyte injected into the can 120 through the first liquid injection hole 151 may be controlled to be greater than that of the electrolyte discharged from the inside of the can 120 through the second liquid injection hole.

FIG 6 is a view illustrating another method for injecting an electrolyte into a secondary battery according to an embodiment of the present invention.

Referring to FIG 6, an electrolyte injection device is connected to a first liquid injection hole 151, and a vacuum forming device is connected to a second liquid injection hole 152. Thus, while an electrolyte is injected into the inside of a can 120 through the first liquid injection hole 151 using the electrolyte injection device, air is suctioned from the inside of the can 120 through the second liquid injection hole using the vacuum forming device to form a vacuum state inside the can 120.

In this method, a flow rate of the electrolyte injected into the can 120 through the first liquid injection hole 151 and a pressure of the air suctioned from the inside of the can 120 through the second liquid injection hole 152 are controlled according to preset values. Thus, since the flow rate is differently controlled according to a length, volume, injection amount, desired process time, etc., of the can 120, specific details thereof will be omitted.

According to the above-described method, in the secondary battery having a terminal part at a side surface thereof, liquid injectability may be improved compared to a case in which the electrolyte is injected into the can through one liquid injection hole, and in particular, the liquid injectability may be more improved in a so-called long cell that is elongated to left and right sides when based on the drawing.

In addition, since the second liquid injection hole 152 is disposed above the first liquid injection hole 151, a problem, in which the electrolyte injected into the can 120 through the first liquid injection hole 151 is introduced into the vacuum forming device may be prevented from occurring.

Since a negative electrode terminal and a positive electrode terminal are provided at left and right sides of the secondary battery described above, upper and lower portions may be effectively cooled at the same time. In the case of the conventional prismatic battery, since the negative electrode terminal and the positive electrode terminal are provided at the upper portion, it is difficult to cool the upper portion.

In addition, in the case of the conventional prismatic battery, since the negative electrode terminal and the positive electrode terminal are provided at the upper portion, there is a limitation in utilizing a space above the upper portion. On the other hand, since the above-described secondary battery is provided with the negative electrode terminal and the positive electrode terminal on the left and right surfaces, the space above the upper portion may be efficiently used.

In addition, in the case of the conventional prismatic battery, since the negative electrode terminal and the positive electrode terminal are provided at the upper portion, charging and discharging current flows in a substantially U-shape, and thus, there is a problem in that a specific area is quickly deteriorated. On the other hand, since the above-described secondary battery is provided with the negative electrode terminal and the positive electrode terminal on the left and right surfaces, charging and discharging current may flow in a horizontal direction to reduce deterioration of the battery.

The above-described embodiments are merely embodiments for carrying out the secondary battery 100, and the present invention is not limited to the embodiment, and the technical spirits of the present invention include all ranges of technologies that may be variously modified by an ordinary person in the art, to which the present invention pertains, without departing from the essence of the present invention as claimed in the following claims.

## Claims

1. A secondary battery comprising:
an electrode assembly comprising a first electrode plate, a second electrode plate, and a separator interposed between the first electrode plate and the second electrode plate;
a can having ends that are opened to left and right sides and provided with a space therein to accommodate the electrode assembly;
a first cap plate configured to seal the left end of the can;
a second cap plate configured to seal the right end of the can;
a first terminal installed on the first cap plate so as to be electrically connected to the first electrode plate;
a second terminal installed on the second cap plate so as to be electrically connected to the second electrode plate;
a first liquid injection hole defined in the first cap plate; and
a second liquid injection hole defined in the second cap plate.

2. The secondary battery as claimed in claim 1, wherein the first liquid injection hole is disposed above the first terminal in the first cap plate.

3. The secondary battery as claimed in claim 1, wherein the second liquid injection hole is disposed above the second terminal in the second cap plate.

4. The secondary battery as claimed in claim 1, wherein the second liquid injection hole is disposed at the same height as the first liquid injection hole.

5. The secondary battery as claimed in claim 1, wherein the second liquid injection hole is disposed above the first liquid injection hole.

6. The secondary battery as claimed in claim 1, wherein the first liquid injection hole and the second liquid injection hole are disposed at heights different from each other.

7. The secondary battery as claimed in claim 1, wherein the second liquid injection hole has the same size as the first liquid injection hole.

8. The secondary battery as claimed in claim 1, wherein the second liquid injection hole has a size less than that of the first liquid injection hole.

9. The secondary battery as claimed in claim 1, wherein the first liquid injection hole and the second liquid injection hole have sizes different from each other.

10. The secondary battery as claimed in claim 1, wherein the first liquid injection hole is configured to inject an electrolyte into the can, and the second liquid injection hole is configured to suction air from the inside of the can.

11. The secondary battery as claimed in claim 1, wherein an insulating member is formed in at least one of between the electrode assembly and the first cap plate or between the electrode assembly and the second cap plate.

12. The secondary battery as claimed in claim 1, wherein an insulating member is formed in at least one of between the first cap plate and the first terminal or between the second cap plate and the second terminal.
